# EUROPÄISCHE PATENTSCHRIFT

(11) **EP 1 460 278 B1**
(45) Veröffentlichungstag und Bekanntmachung des Hinweises auf die Patenterteilung: **07.09.2005**
(21) Anmeldenummer: 03028388.1
(22) Anmeldetag: 11.12.2003
(51) Int. Cl.: F16B 31/02, H01R 4/30

(54) **Befestigungsmittel, insbesondere Abreissschraube, und zugehörige Schraubverbindungsklemme**
Fastener, especially a shearable screw and associated clamping device
Dispositif de fixation, notamment vis frangible, et dispositif de serrage associé

(30) Priorität: 17.03.2003 DE 10312147
(43) Veröffentlichungstag der Anmeldung: 22.09.2004
(73) Patentinhaber: Pfisterer Kontaktsysteme GmbH & Co. KG, 73650 Winterbach (DE)
(72) Erfinder: Frank, Erich, 73269 Hochdorf (DE); Roth, Jürgen, 70197 Stuttgart (DE)
(74) Vertreter: Bartels & Partner

(56) Entgegenhaltungen:
- EP-A- 0 692 643
- EP-A- 0 984 176
- US-B1- 6 209 424

## Beschreibung

Die Erfindung betrifft ein Befestigungsmittel gemäß dem Oberbegriff des Anspruchs 1, insbesondere eine Abreißschraube mit kontinuierlichen Abreißstellen, sowie eine zugehörige Schraubverbindungsklemme.

Beispielsweise in der Schraubverbindungstechnik von Kabelleitern für die Energietechnik besteht die Anforderung, daß Befestigungsschrauben von Verbindungselementen, insbesondere Schraubklemmen, immer nahe der Oberfläche des Klemmenkörpers abreißen, insbesondere daß die Verbindungselemente nicht über die Oberfläche des Klemmenkörpers überstehen, da anschließend über den Klemmenkörper Isolierschichten aufgebracht werden, beispielsweise Isoliermuffen, und jeder Überstand über den Klemmenkörper diese Isolationsschichten beschädigen kann.

Aus der DE 199 60 198 A1 ist ein Befestigungsmittel bekannt, dessen Gewindebereich diskrete Abreißstellen als sogenannte Sollbruchstellen aufweist. Die Auswahl der jeweiligen Sollbruchstelle erfolgt über in die Werkzeugaufnahme einsetzbare Distanzierelemente.

Aus der WO 96/31706 ist ein Befestigungsmittel bekannt, bei dem die Abreißdrehmomente von der Schraubenspitze zu dem Schraubenkopf des Gewindebereiches zunehmen. Auch diese Befestigungsmittel weist diskrete Sollbruchstellen aufweist, die durch Einschnitte in den Schraubenbolzen definiert sind.

Aus der EP 0 692 643 A1 ist ein Befestigungsmittel gemäß dem Oberbegriff des Anspruchs 1 bekannt. Auch diese bekannte Abreißschraube weist diskrete Sollbruchstellen auf, die durch Einschnitte in das Außengewinde definiert sind. Eine axiale Stufenbohrung im Gewindebereich weist einen in Richtung auf das Kopfbereich-nahe Ende zunehmenden Durchmesser auf. In den Gewindebereichen zwischen den Sollbruchstellen ist die Dicke der sich zwischen Bohrung und Außengewinde ergebenden Wandung konstant.

Auch die EP 0 984 176 A1 zeigt eine Abreißschraube, mit diskreten Sollbruchstellen. Auch hier ist in den Gewindebereichen zwischen den Sollbruchstellen die Dicke der sich zwischen der Bohrung und dem Außengewinde ergebenden Wandung konstant.

Alle bekannten Abreißschrauben weisen diskrete Sollbruchstellen mit einer oder mehreren Unterbrechungen des tragenden Gewindes auf. Dies kann nachteilig sein, etwa dann, wenn die Abreißschraube zwar an einer in den Klemmenkörper eingeführten Stelle abreißt, dadurch allerdings die Anzahl der in Eingriff befindlichen Gewindewindungen nur gering ist und dadurch die Zuverlässigkeit der hergestellten Schraubverbindung nicht ausreichend gewährleistet ist.

Der Erfindung liegt daher die Aufgabe zugrunde, ein Befestigungsmittel bereitzustellen, welche die Nachteile des Standes der Technik überwindet. Insbesondere soll das erfindungsgemäße Befestigungsmittel dauerhaft eine mechanisch stabile Verbindung gewährleisten. Das Befestigungsmittel soll darüber hinaus kostengünstig herstellbar sein und beim Einschrauben zuverlässig an der geeignetsten Stelle abreißen.

Diese Aufgabe ist durch das im Anspruch 1 bestimmte Befestigungsmittel gelöst. Besondere Ausführungsarten der Erfindung sind in den Unteransprüchen bestimmt. Eine zugehörige Vorrichtung zum Schraubverbinden von elektrischen Leiter mit anderen Leitern und/oder mit einem Klemmenkörper ist in dem nebengeordneten Anspruch bestimmt.

Eine bevorzugte Ausführungsform der erfindungsgemäßen Abreißschraube hat im Unterschied zum Stand der Technik keine vordefinierten Sollbruchstellen, die durch diskrete Schwächung des Außengewindes an einigen wenigen Stellen hergestellt sind. Vielmehr stellt die erfindungsgemäße Abreißschraube über einen Bereich von mehreren Millimetern kontinuierlich mögliche Abreißstellen bereit, an denen die Abreißschraube bündig zur Oberfläche beispielsweise eines Klemmenkörpers abreißen kann.

In einer bevorzugten Ausführungsform liegt die erste mögliche Abreißstelle mit dem geringsten Abreißdrehmoment an dem bodenseitigen Ende der Bohrung. Das erforderliche Abreißdrehmoment steigt zum Kopfbereich hin vorzugsweise stufenlos an, insbesondere gleichmäßig fortlaufend oder sogar linear über der axialen Länge. Die sich im Gewindebereich zwischen der Bohrung und dem Außengewinde ergebende Wandung weist eine Dicke auf, die vorzugsweise deutlich geringer ist als der Durchmesser der Bohrung, insbesondere geringer als 50% des Durchmessers der Bohrung und vorzugsweise geringer als 10% des Durchmessers der Bohrung. Die Dicke ist letztlich abhängig von dem verwendeten Werkstoff für die Abreißschraube und von dem gewünschten Abreißdrehmoment. Typische Werte für die Dicke der Wandstärke liegen bei elektrischen Schraubverbindern für die Energieversorgungstechnik bei einigen Zehntel Millimetern bis einige Millimeter.

In einer besonderen Ausführungsart nimmt der Durchmesser der Bohrung über mindestens einen Teil ihrer axialen Erstreckung ausgehend von einem Kopfbereich-fernen Ende zu einem Kopfbereich-nahen Ende kontinuierlich ab. Vorzugsweise ist die Bohrung über mindestens einen Teil ihrer axialer Erstreckung konisch, wobei der von den Kegelflächen eingeschlossene Winkel weniger als 5° beträgt, insbesondere weniger als 2° und vorzugsweise etwa 0,8°.

In einer besonderen Ausführungsart weist die Wandung mindestens eine von der Bohrung ausgehende und sich radial in die Wandung erstreckende Ausnehmung auf. Die Bohrung im Gewindebereich kann beispielsweise nicht durchgehend konisch sein, sondern auch Stufen, Kerben oder Rillen aufweisen, die es erlauben, ganz bestimmte Abstufungen im Abreißdrehmoment zu realisieren und/oder das Abreißdrehmoment an einer bestimmten Abreißquerschnittsfläche vorzugeben. So kann die Querschnittsfläche der Wandung von der Kreisringform abweichen, beispielsweise durch Einformen eines Zylinders oder sogar Kegels mit einer von der Kreisform abweichenden Grundfläche in die Bohrung, durch Einschneiden eines Gewindes in die Bohrung, durch Einstechen von in Axialrichtung oder im Umfangsrichtung verlaufenden Nuten in die Bohrung und dergleichen.

Durch die konische Bohrung nimmt das Abreißdrehmoment in Richtung auf den Kopfbereich kontinuierlich zu, so daß die Schraube soweit wie möglich vom Kopf entfernt abreißt. Das aufnehmende Gewinde beispielsweise eines Klemmenkörpers wirkt dabei stützend auf das Außengewinde und gewährleistet, daß die Schraube stets an der Stelle abreißt, an der die Schraube aus dem Klemmenkörper austritt.

Dadurch daß das Außengewinde vorzugsweise ununterbrochen verläuft, insbesondere keine die diskreten Sollbruchstellen definierenden Einschnitte aufweist, ergibt sich über den gesamten Bereich der im Eingriff befindlichen Gewindelänge eine konstante hohe Ausreißfestigkeit des Gewindes. Dadurch sind auch höhere Anzugsdrehmomente möglich. Dies bringt insbesondere bei den in der Energietechnik häufig verwendeten Aluminiumleitern mit Leiterquerschnitten von mehr als 100 mm² und der Bauform rund/mehrdrähtig/verdichtet Vorteile aufgrund des Querleitfähigkeitsproblems zwischen den oxidierten Einzeldrähten des Leiters an der Kontaktstelle.

Dadurch daß die Schraube an kontinuierlichen Stellen abreißen kann, wird unabhängig von der Einschraubtiefe ein Überstand des abgerissenen Gewindebereichs über den Klemmenkörper verhindert. Die bei den bekannten Abreißschrauben aufwendige und nur empirisch zu ermittelnde geometrische Abstimmung des Verbindungssystems aus Klemmenkörper und Abreißschraube, Lage des geklemmten Leiters sowie Lage der Abreißkerbe der Schraube kann entfallen. Die optimale Abreißstelle ist für den Anwender im zugeordneten Querschnittbereich eines zu kontaktierenden Leiters gewährleistet, unabhängig davon, ob als Leiterwerkstoff Kupfer, Aluminium oder ein sonstiger Werkstoff verwendet wird, und unabhängig von einer möglichen Schwankung des Durchmessers des Leiters beispielsweise aufgrund von zulässigen diesbezüglichen Toleranzen oder aufgrund einer Verdichtung des Leiters. Die bisher erforderliche Prüfung, wie die Abreißkerbe der Schraube liegt, und ob überhaupt das Abreißdrehmoment ohne Beschädigung des Gewindes erreicht wird, kann ebenfalls entfallen.

Für die Schraubverbindung bei Energiekabeln ist es notwendig, eine bestimmte Mindestkraft über das Drehmoment der Schraube aufzubringen, um den elektrischen Übergangswiderstand dauerhaft klein zu halten. Beim Einsatz der erfindungsgemäßen Befestigungsmittel kann das Gewinde im Klemmenkörper verkürzt werden bei gleicher mechanischer Festigkeit wie bei den bekannten Abreißschrauben. Dadurch ist es möglich, bei gleicher Funktion die Schraubverbindungsklemme mit geringerem Außendurchmesser und/oder mit größerer Innenbohrung zu bauen.

Kleinere Außendurchmesser haben dabei den Vorteil, daß schlankere Schraubverbindungsklemmen gebaut werden können, die in kleinere und damit kostengünstigere Garnituren wie beispielsweise Isolationsmuffen passen. Größere Innenbohrungen haben darüber hinaus den Vorteil, daß der bedienbare Kabelquerschnittsbereich erweitert ist und damit die Zuordnung einer bestimmten Garnitur zu einer größeren Anzahl von Kabelleitertypen möglich ist, wodurch beispielsweise die Lagerhaltungskosten für den Anwender herabgesetzt sind.

Die erfindungsgemäße Abreißschraube ist auch kostengünstiger in der Herstellung, weil die nach dem Stand der Technik erforderlichen schmalen und tiefen Einstiche in das Außengewinde entfallen. Die Maßhaltigkeit und Reproduzierbarkeit der nach dem Stand der Technik herzustellenden Einstiche definieren darüber hinaus die Exaktheit des eingestellten Abreißdrehmomentes. Aus diesem Grund muß nach dem Stand der Technik die Maßtoleranz zwischen Schraubengewinde und Gewinde des Klemmenkörpers bisher sehr eng gewählt werden, weil deutlich weniger tragende Gewindefläche zwischen Abreißschraube und Klemmenkörper zur Verfügung stand. Mit der erfindungsgemäßen Abreißschraube kann die Fertigungstoleranz bei gleicher Funktionalität weniger genau gesetzt werden, was eine wirtschaftlichere Produktion ermöglicht.

Die Anwendung der erfindungsgemäßen Abreißschraube liegt vorzugsweise auf dem Gebiet der elektrischen Verbindungstechnik, kann aber auch für beliebige mechanische Befestigungs- und Verbindungsanforderungen verwendet werden, insbesondere für solche Verbindungen, die nach dem Festziehen und Abreißen jedenfalls mit demselben Werkzeug nicht wieder gelöst werden können.

Durch das bei der erfindungsgemäßen Abreißschraube in Richtung auf den Kopfbereich zunehmende Abreißdrehmoment führt dazu, daß bei einer elektrischen Schraubverbindungsklemme ein kleiner Leiter, bei dem die Klemmschraube weiter in den Klemmenkörper eingedreht wird, eine höhere Klemmkraft bis zum Abreißen der Schraube erfährt, als ein größerer Leiter. Um diesem in manchen Anwendungsfällen unerwünschten Effekt entgegenzuwirken, kann das Außengewinde ab einer ersten zulässigen Abreißstelle in Richtung auf den Kopfbereich schwergängiger ausgeführt werden.

Hierzu kann beispielsweise die Form des Außengewindes im Bereich von der ersten zulässigen Abreißstelle zum Kopfbereich hin gegenüber der Form des Außengewindes in dem, bezogen auf die erste zulässige Abreißstelle, axial gegenüberliegenden Bereich verschieden sein. Hierzu kann an der Übergangsstelle der Außendurchmesser des Außengewindes erhöht, der Flankenwinkel erhöht und/oder der Kerndurchmesser erhöht sein. Diese Schwergängigkeit nimmt beim weiteren Eindrehen in das Gewinde des Klemmenkörpers vorzugsweise kontinuierlich zu, da die Gewindefläche, welche die Schwergängigkeit hervorruft, beim weiteren Eindrehen kontinuierlich größer wird. Dadurch wird ein kontinuierlich ansteigender Anteil des zum Eindrehen der Abreißschraube aufgebrachten Drehmoments in Reibung und nicht mehr in Druckkraft auf den zu klemmenden Leiter umgesetzt.

Hierbei erweist es sich als vorteilhaft, daß bei der erfindungsgemäßen Abreißschraube aufgrund der verhältnismäßig großen Bohrung im Gewindebereich nur eine verhältnismäßig dünne Wandung zwischen der Bohrung und dem Außengewinde verbleibt, die sich plastisch und/oder elastisch verhältnismäßig leicht nach innen in den Bereich der Bohrung verformen läßt. Die jedenfalls abschnittsweise dünnwandige erfindungsgemäße Abreißschraube ist daher in der Lage, das vorgesehene partielle Gewindeübermaß in einen konstanten Anpreßdruck auf das Gewinde des Klemmkörpers zu übertragen und dadurch weitgehend unabhängig von der Fertigungstoleranz die Schwergängigkeit aufzubringen. Insbesondere können die zugehörigen Fertigungstoleranzen im Bereich einiger Zehntel Millimeter liegen. Die Vorteile der Stufung des Außengewindes liegen in einer definierten und witterungsunabhängige Einsatzmöglichkeit.

Alternativ oder ergänzend kann die Schwergängigkeit auch dadurch erreicht werden, daß von der ersten zulässigen Abreißstelle in Richtung auf den Kopfbereich mindestens abschnittsweise auf das Außengewinde eine Beschichtung aufgebracht ist, insbesondere ein Kunststofflack. Das Aufbringen kann dabei ganzflächig oder axial und/oder in Umfangsrichtung partiell erfolgen. Beispielsweise können hierfür Schraubensicherungslacke verwendet werden, die eine sichernde und damit auch bremsende Eigenschaft auf das Eindrehen haben, weil der Reibwert erhöht ist. Mit jedem beschichteten Gewindegang der Abreißschraube, der in den Klemmenkörper eingedreht wird, steigt die schwergängige Wirkung an. In dem selben Maße reduziert sich die auf den Leiter ausgeübte Klemmkraft. Der Vorteil der zusätzlichen Beschichtung liegt in einem einfachen, rationellen Fertigungsverfahren, ohne verringerte Fertigungstoleranz für das Schraubengewinde.

Die Erfindung betrifft auch eine Vorrichtung zur Schraubverbindung, insbesondere elektrischer Leiter, vorzugsweise in einer Schraubverbindungsklemme, mit mindestens einem in einen Klemmenkörper einschraubbaren erfindungsgemäßen Befestigungsmittel.

Weitere Vorteile, Merkmale und Einzelheiten der Erfindung ergeben sich aus den Unteransprüchen und der nachfolgenden Beschreibung, in der unter Bezugnahme auf die Zeichnungen mehrere Ausführungsbeispiele im Einzelnen beschrieben sind. Dabei können die in den Ansprüchen und in der Beschreibung erwähnten Merkmale jeweils einzeln für sich oder in beliebiger Kombination erfindungswesentlich sein.
- Fig. 1: zeigt eine Seitenansicht eines ersten Ausführungsbeispiels der erfindungsgemäßen Abreißschraube,
- Fig. 2: zeigt einen Schnitt entlang II-II des ersten Ausführungsbeispiels der Fig. 1,
- Fig. 3: zeigt einen Querschnitt durch ein zweites Ausführungsbeispiel,
- Fig. 4: zeigt einen Querschnitt durch ein drittes Ausführungsbeispiel,
- Fig. 5: zeigt einen Querschnitt durch ein viertes Ausführungsbeispiel,
- Fig. 6: zeigt einen Querschnitt durch ein fünftes Ausführungsbeispiel,
- Fig. 7: zeigt eine Draufsicht auf das fünfte Ausführungsbeispiel,
- Fig. 8: zeigt eine perspektivische Ansicht des fünften Ausführungsbeispiels,
- Fig. 9: zeigt einen Querschnitt durch ein sechstes Ausführungsbeispiel und
- Fig. 10: zeigt einen Querschnitt durch eine erfindungsgemäße Schraubverbindungsklemme.

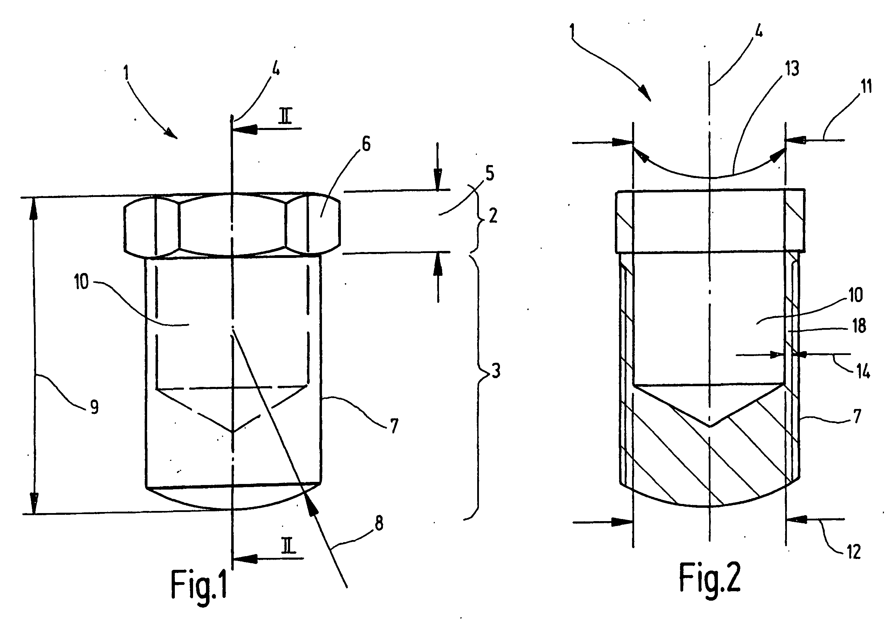

Die Fig. 1 zeigt eine Seitenansicht einer erfindungsgemäßen Abreißschraube 1, die einen Kopfbereich 2 und einen sich daran anschließenden einstückig mit dem Kopfbereich 2 ausgebildeten Gewindebereich 3 aufweist. Der Kopfbereich 2 weist in Richtung der Längsachse 4 eine Erstreckung 5 von einigen Millimetern auf und bildet eine Werkzeugangriffsfläche 6 in Form eines Außensechskants aus. Im Ausführungsbeispiel erstreckt sich ein Außengewinde 7 über die im wesentlichen gesamte axiale Länge des Gewindebereichs 3. Der Gewindebereich 3 weist außerdem zentrisch zur Längsachse 4 und vorzugsweise rotationssymmetrisch eine Bohrung 10 auf, die sich bis über die Hälfte der axialen Erstreckung des Gewindebereichs 3 erstreckt. An einem dem Kopfbereich 2 fernen Ende ist der Gewindebereich 3 kalottenförmig ausgebildet mit einem Radius von beispielsweise etwa 20 mm. Die Gesamtlänge 9 der Abreißschraube 1 beträgt im ersten Ausführungsbeispiel etwa 30 mm.

Die Fig. 2 zeigt einen Schnitt entlang II-II des Ausführungsbeispiels der Fig. 1 der erfindungsgemäßen Abreißschraube 1. Der Durchmesser 11 der Bohrung 10 im Kopfbereich 2 ist einige Zehntel Millimeter bis zu wenigen Millimetern kleiner als der Durchmesser 12 am unteren Ende der Bohrung 10. Der Winkel 13 der konischen Bohrung 10 beträgt im Ausführungsbeispiel weniger als 2°, insbesondere etwa 1°. Dieser Winkel 13 ist ebenso wie die Dicke 14 der Wandung 18 zwischen Bohrung 10 und Außengewinde 7 abhängig von dem aufzubringenden Drehmoment und Abreißdrehmoment unter Berücksichtigung des Werkstoffes der Abreißschraube 1. Für die Dicke 14 der Wandung 18 ergibt sich beispielsweise bei einer Abreißschraube 1 mit einem symmetrischen M 18 Außengewinde 7 und einem gewünschten Abreißdrehmoment zwischen 10 und 50 Nm, insbesondere zwischen 25 und 35 Nm, ein Wert von etwa 1 mm. Die Tiefe der Bohrung 10 entlang der Längsachse 4 bestimmt im ersten Ausführungsbeispiel eine erste zulässige Abreißstelle der Abreißschraube 1.

Die Abreißschraube 1 ist vorzugsweise einstückig aus einem Werkstoff mit einer ausreichend hohen elektrischen Leitfähigkeit hergestellt, beispielsweise aus Messing. Zur Herabsetzung des Kontaktwiderstandes im Falle eines elektrischen Schraubverbinders weist die Abreißschraube 1 jedenfalls an ihrem kalottenförmigen Ende eine kontaktfördernde Beschichtung auf, beispielsweise aus Zinn, die vorzugsweise auch den Reibungskoeffizient herabsetzt. Vorzugsweise ist die Abreißschraube 1 ganzflächig beschichtet. Dadurch ergibt sich auch ein verbessertes Einschraubverhalten und Kontaktverhalten mit einem Klemmenkörper und/oder einem elektrischen Leiter aus Aluminium.

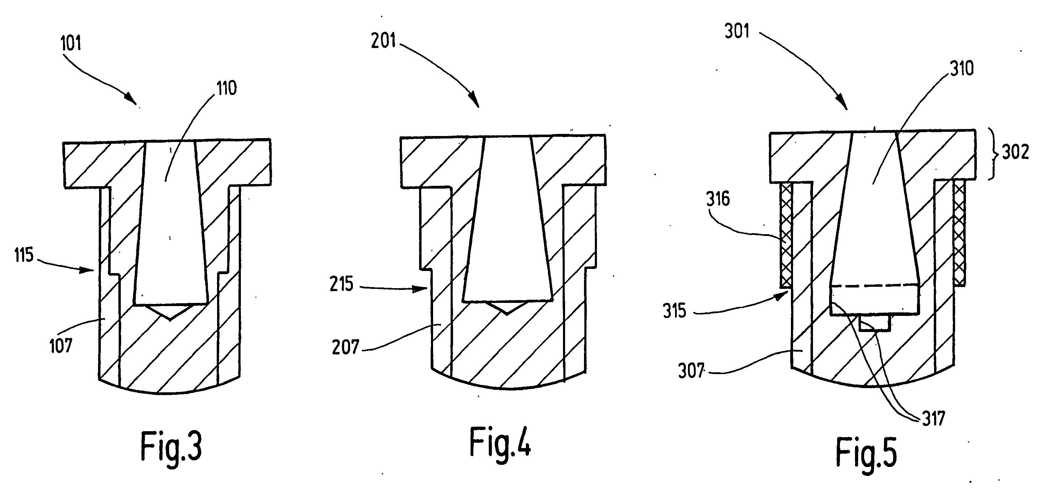

Die Fig. 3 zeigt einen Querschnitt durch ein zweites Ausführungsbeispiel der Abreißschraube 101. Der Winkel der Bohrung 110 ist dabei ebenso wie in den weiteren Ausführungsbeispielen der Fig. 4 bis 6 lediglich aus Gründen der deutlicheren Darstellung gegenüber dem Ausführungsbeispiel der Fig. 1 und 2 stark vergrößert. Das Außengewinde 107, und insbesondere dessen Kerndurchmesser, weist an der Stelle 115, und insbesondere oberhalb des Sacklochendes der Bohrung 110, einen Sprung auf. Dadurch erhöht sich das Eindrehmoment ab dem Zustand, an dem diese Stelle 115 in den zugehörigen Klemmenkörper eingedreht wird. Dies hat zur Folge, daß die Kraft in Axialrichtung, und mithin die Kraft welche die Abreißschraube 101 auf den zu klemmenden Gegenstand ausübt, geringer ist als bei einem gleichförmig verlaufenden Außengewinde.

Die Fig. 4 zeigt ein drittes Ausführungsbeispiel einer Abreißschraube 201. Dabei weist das Außengewinde 207 an der Stelle 215 einen Sprung betreffend den Außendurchmesser des Außengewindes 207 auf. Auch dadurch kommt es zu einem erhöhten Kraftaufwand bei einem weiteren Eindrehen der Abreißschraube 201 in den Klemmenkörper.

Anstelle des sprunghaften Überganges an der Stelle 115, 215 des zweiten und dritten Ausführungsbeispiels kann sich der Kerndurchmesser und/oder der Außendurchmesser, ebenso wie beispielsweise der Flankenwinkel des Außengewindes 107, 207, kontinuierlich oder durch mehrere kleinere Sprünge derart verändern, daß beim weiteren Eindrehen der Abreißschraube 101, 201 das erforderliche Drehmoment erhöht ist.

Die Fig. 5 zeigt ein viertes Ausführungsbeispiel der erfindungsgemäßen Abreißschraube 301. Dabei ist an einem dem Kopfbereich 302 nahen Abschnitt des Außengewindes 307 ringförmig eine Beschichtung 316 aufgebracht, durch welche das weitere Eindrehen der Abreißschraube 301 in den Klemmenkörper schwergängiger gemacht ist. Bei der Beschichtung 316 kann es sich beispielsweise um einen sogenannten Sicherungslack handeln oder um jede andere geeignete Beschichtung, insbesondere aus Kunststoff. Die Beschichtung 316 kann auch nur axial abschnittsweise auf die Abreißschraube 310 aufgebracht sein, oder streifen- oder punktförmig.

An ihrem vom Kopfbereich 302 entfernten Ende weist die Bohrung 310 eine weitere Werkzeugangriffsfläche 317 auf, die beispielsweise zu einem Lösen der Abreißschraube verwendbar ist. In der Fig. 5 sind zwei mögliche Ausführungsformen einer solchen weiteren Werkzeugangriffsfläche 317 eingezeichnet, die alternativ oder ergänzend vorgesehen sein können. Beispielsweise kann die in die Bodenfläche eingesenkte Werkzeugangriffsfläche 317 einen Innensechskant bilden.

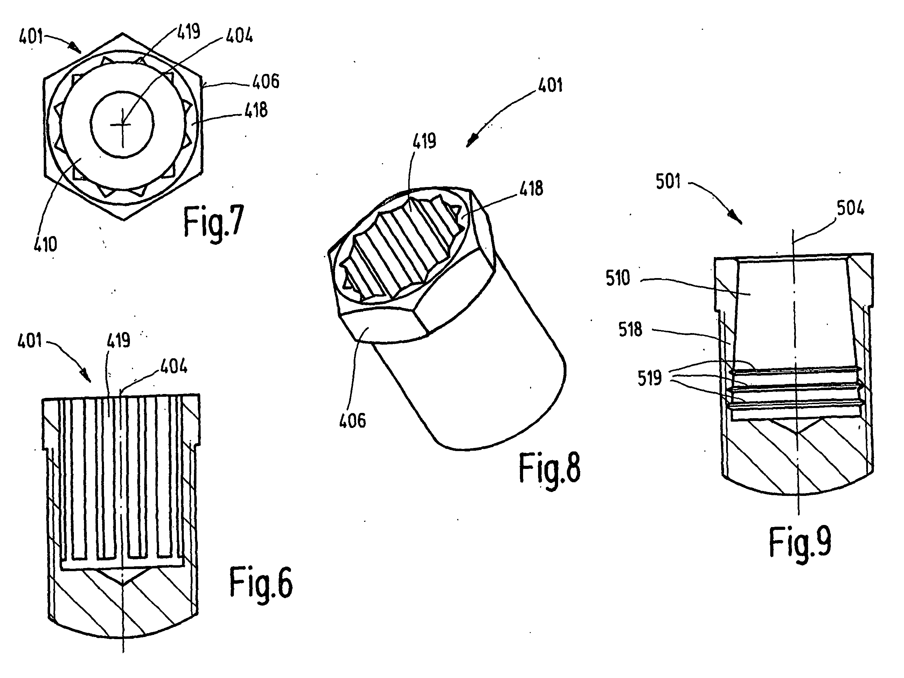

Die Fig. 6 zeigt einen Querschnitt durch ein fünftes Ausführungsbeispiel einer Abreißschraube 401 und die Fig. 7 zeigt die zugehörige Draufsicht. Die Wandung 418 weist in Umfangsrichtung gleichverteilt angeordnete und sich axial im wesentlichen über den gesamten Bereich der Bohrung 410 erstreckende, von der Bohrung 410 ausgehende und sich radial in die Wandung 418 erstreckende Ausnehmungen 419 auf. In der in der Fig. 7 dargestellten Draufsicht sind diese Ausnehmungen 419 dreieckförmig. Anstelle der dreieckförmigen nutenartigen Ausnehmungen 419, die im wesentlichen parallel zueinander und parallel zur Längsachse 404 verlaufen, kann in die Bohrung auch ein regelmäßiges oder unregelmäßiges beliebiges Vieleck eingebracht sein, beispielsweise durch Stoßen, Räumen oder dergleichen.

Die gegenüber dem ersten Ausführungsbeispiel der Fig. 1 von der Kreisringfom abweichende Kontur des Querschnitts der Wandung 418 bewirkt eine Herabsetzung der Torsionssteifigkeit dadurch, daß in Umfangsrichtung die Wandung 418 in mehrere Teilbereiche unterteilt ist, die bei gleicher Querschnittsfläche gegenüber einem Kreisring ein kleineres Abreißdrehmoment ermöglichen. Die Ausnehmungen 419 können in Umfangsrichtung voneinander separiert oder durch in Umfangsrichtung verlaufende Verbindungsnuten miteinander verbunden sein.
In Axialrichtung sind die Ausnehmungen 419 vorzugsweise durchgehend, können aber auch unterbrochen sein oder sich nur abschnittsweise erstrecken.

Die Fig. 8 zeigt eine perspektivische Ansicht der Abreißschraube 401 der Figuren 6 und 7. Die Werkzeugangriffsfläche 406 ist als Außensechskant ausgebildet. Alternativ oder ergänzend kann auch ein Innensechskant, ein sonstiger Vielkant, ein Schlitz, Kreuzschlitz oder dergleichen als Werkzeugangriffsfläche vorgesehen sein.

Die Fig. 9 zeigt einen Querschnitt durch ein sechstes Ausführungsbeispiel der Abreißschraube 501. Dabei sind ausgehend von der Bohrung 510 in die Wandung 518 zur Längsachse 504 konzentrische kreisförmige Rillen 519 eingebracht. Die Rillen 519 können in Axialrichtung äquidistant oder in unterschiedlichen Abständen angeordnet sein. Im dargestellten Ausführungsbeispiel nimmt der Durchmesser der Rillen 519 von dem Kopfbereich-fernen Ende zu dem Kopfbereich-nahen Ende kontinuierlich ab. Anstelle der voneinander beabstandeten und separierten Rillen 519 kann auch ein eingängiges oder mehrgängiges zylindrisches oder konisches Gewinde in die Wandung 518 eingebracht sein, dessen Steigung und/oder Drehsinn vorzugsweise unterschiedlich zu dem Außengewinde der Abreißschraube ist.

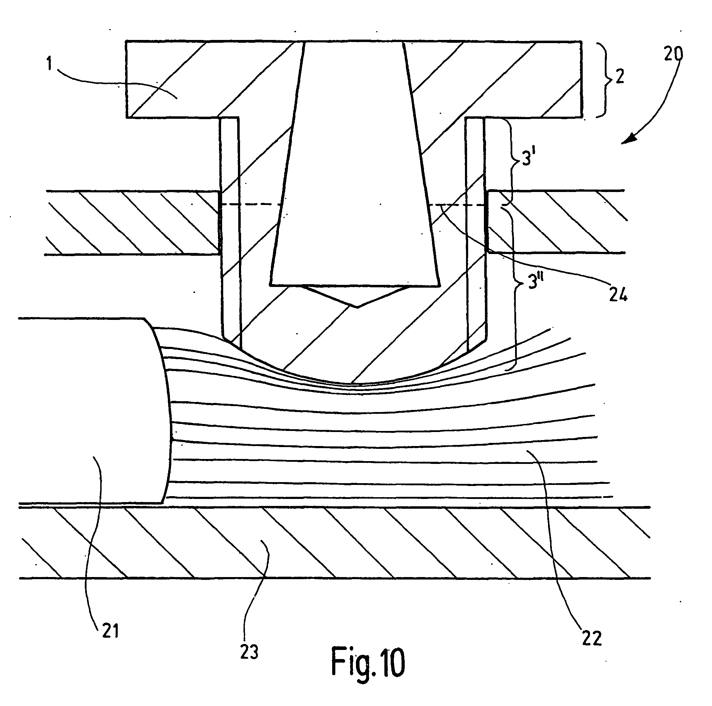

Die Fig. 10 zeigt einen Querschnitt durch eine erfindungsgemäße Schraubverbindungsklemme 20 zum Schraubverbinden eines elektrischen Leiters 21. Der endseitig abisolierte Leiter 21 weist eine Vielzahl von mehr oder weniger dünnen Leiteradern 22 auf, die in dem im wesentlichen rohrförmigen Klemmenkörper 23 durch eine erfindungsgemäße Abreißschraube 1 elektrisch verbindend befestigt sind. Beim weiteren Eindrehen der Abreißschraube 1 in die Gewindebohrung des Klemmenkörpers 23 reißt der Kopfbereich 2 zusammen mit einem Kopfbereich-nahen Abschnitt 3' des Gewindebereiches an der gestrichelt eingezeichneten Linie 24 ab. Der verbleibende Gewindebereich 3" fixiert die Leiteradern 22 dauerhaft zuverlässig und gewährleistet einen guten elektrischen Kontakt zwischen Leiteradern 22 und dem Klemmenkörper 23.

Die Abreißlinie 24 befindet sich unterhalb der Außenkontur des Klemmenkörpers 23, so daß sowohl das Auftreten von Feldstärkespitzen als auch eine Verletzung einer den Klemmenkörper 23 einschließenden Isolationsmuffe zuverlässig verhindert sind. In einem nicht dargestellten Bereich kann der Klemmenkörper 23 einen weiteren Leiter aufnehmen und insbesondere eine elektrische Verbindung zwischen dem weiteren Leiter und dem geklemmten Leiter 21 herstellen.

Die erfindungsgemäß über mindestens einen Teil ihrer axialen Erstreckung ausgehend von einem Kopfbereich-fernen Ende zu einem Kopfbereich-nahen Ende kontinuierlich zunehmende Dicke 14 der Wandung 18; 418; 518 ist bei allen beschriebenen Ausführungsbeispielen zwischen dem Kerndurchmesser des Außengewindes 7; 107; 207; 307 und der lichten Weite der Bohrung 10; 110; 310; 410; 510 zu messen. Alternativ zu der konischen Bohrung 10; 110; 310; 410; 510 in Verbindung mit einem zylindrischen Außengewinde 7 kann auch eine zylindrische Bohrung mit einem entsprechenden konischen Außengewinde realisiert werden. Die Kontinuität der Zunahme der Dicke 14 kann durch die in den Ausführungsbeispielen der Figuren 6 bis 9 eingebrachten Ausnehmungen 419; 519 unterbrochen sein.

## Patentansprüche

1. Befestigungsmittel, insbesondere Abreißschraube (1; 101; 201; 301; 401; 501), mit einem Kopfbereich (2), der eine Werkzeugangriffsfläche (6) aufweist, und einem Gewindebereich (3), der über mindestens einen Teil seiner axialen Erstreckung ein durchgehendes Außengewinde (7; 107; 207; 307) und eine Bohrung (10; 110; 310; 410; 510) aufweist, **dadurch gekennzeichnet, daß** die Dicke (14) der sich im Gewindebereich (3) zwischen Bohrung (10; 110; 310; 410; 510) und Außengewinde (7; 107; 207; 307) ergebenden Wandung (18; 418; 518) über mindestens einen Teil ihrer axialen Erstreckung ausgehend von einem Kopfbereich-fernen Ende zu einem Kopfbereich-nahen Ende kontinuierlich zunimmt.

2. Befestigungsmittel nach Anspruch 1, **dadurch gekennzeichnet, daß** die Dicke (14) der Wandung (18; 418; 518) geringer ist als der Durchmesser (11, 12) der Bohrung (10; 110; 310; 410; 510), insbesondere geringer als 50 % des Durchmessers (11, 12), und vorzugsweise geringer als 10 % des Durchmessers (11, 12).

3. Befestigungsmittel nach Anspruch 1 oder 2, **dadurch gekennzeichnet, daß** der Durchmesser (11; 12) der Bohrung (10; 110; 310; 410; 510) über mindestens einen Teil ihrer axialen Erstreckung ausgehend von einem Kopfbereich-fernen Ende zu einem Kopfbereich-nahen Ende kontinuierlich abnimmt.

4. Befestigungsmittel nach einem der Ansprüche 1 bis 3, **dadurch gekennzeichnet, daß** die Bohrung (10; 110; 310; 410; 510) über mindestens einen Teil ihrer axialen Erstreckung konisch ist.

5. Befestigungsmittel nach Anspruch 4, **dadurch gekennzeichnet, daß** der Winkel (13) des Konus weniger als 5° beträgt, insbesondere weniger als 2°, und vorzugsweise etwa 1° beträgt.

6. Befestigungsmittel nach einem der Ansprüche 1 bis 5, **dadurch gekennzeichnet, daß** die Wandung (18; 418; 518) mindestens eine von der Bohrung (10; 110; 310; 410; 510) ausgehende und sich radial in die Wandung (18; 418; 518) erstreckende Ausnehmung (419; 519) aufweist.

7. Befestigungsmittel nach einem der Ansprüche 1 bis 6, **dadurch gekennzeichnet, daß** der Bereich, in dem das Befestigungsmittel kontinuierlich abreißen kann, mehrere Millimeter beträgt, insbesondere mehr als 5 mm und vorzugsweise mehr als 10 mm beträgt.

8. Befestigungsmittel nach einem der Ansprüche 1 bis 7, **dadurch gekennzeichnet, daß** ab einer ersten zulässigen Abreißstelle das Außengewinde (7; 107; 207; 307) in Richtung auf den Kopfbereich (2) schwergängiger ist.

9. Befestigungsmittel nach Anspruch 8, **dadurch gekennzeichnet, daß** die Form des Außengewindes (7; 107; 207; 307) im Bereich von der ersten zulässigen Abreißstelle zum Kopfbereich (2) hin verschieden ist, gegenüber der Form des Außengewindes (7; 107; 207; 307) in dem, bezogen auf die erste zulässige Abreißstelle, axial gegenüberliegenden Bereich.

10. Befestigungsmittel nach Anspruch 9, **dadurch gekennzeichnet, daß** im Bereich von der ersten zulässigen Abreißstelle zum Kopfbereich (2) hin der Außendurchmesser des Außengewindes (7; 107; 207; 307) erhöht ist, der Flankenwinkel erhöht ist und/oder der Kerndurchmesser erhöht ist.

11. Befestigungsmittel nach einem der Ansprüche 8 bis 10, **dadurch gekennzeichnet, daß** von der ersten zulässigen Abreißstelle in Richtung auf den Kopfbereich (2) mindestens abschnittsweise das Außengewinde (7; 107; 207; 307) eine Beschichtung (16) aufweist, insbesondere einen Kunststofflack.

12. Befestigungsmittel nach einem der Ansprüche 1 bis 11, **dadurch gekennzeichnet, daß** die Bohrung (10; 110; 310; 410; 510), vorzugsweise nahe oder an ihrem Kopfbereich-fernen Ende, eine weitere Werkzeugangriffsfläche (317) aufweist.

13. Vorrichtung zum Schraubverbinden elektrischer Leiter (21), insbesondere Schraubverbindungsklemme (20), mit mindestens einem in einen Klemmenkörper (23) einschraubbaren Befestigungsmittel nach einem der Ansprüche 1 bis 12.

## Claims

1. A fixing means, especially a shearable screw (1; 101; 201; 301; 401; 501), having a head region (2), which has a locating surface (6) for application of a tool, and having a threaded region (3), which over at least a portion of its axial extent has a continuous external thread (7; 107; 207; 307) and a bore (10; 110; 310; 410; 510), **characterised in that** the thickness (14) of the resulting wall (18; 418; 518) in the threaded region (3) between the bore (10; 110; 310; 410; 510) and the external thread (7; 107; 207; 307) increases continuously over at least a portion of its axial extent starting from an end remote from the head region towards an end close to the head region.

2. A fixing means according to claim 1, **characterised in that** the thickness (14) of the wall (18; 418; 518) is less than the diameter (11, 12) of the bore (10; 110; 310; 410; 510), especially less than 50% of the diameter (11, 12), and preferably less than 10% of the diameter (11, 12).

3. A fixing means according to claim 1 or 2, **characterised in that** the diameter (11,12) of the bore (10; 110; 310; 410; 510) decreases continuously over at least a portion of its axial extent starting from an end remote from the head region towards an end close to the head region.

4. A fixing means according to any one of claims 1 to 3, **characterised in that** the bore (10; 110; 310; 410; 510) is conical over at least a portion of its axial extent.

5. A fixing means according to claim 4, **characterised in that** the angle (13) of the cone is less than 5°, especially less than 2°, and preferably about 1°.

6. A fixing means according to any one of claims 1 to 5, **characterised in that** the wall (18; 418; 518) has at least one recess (419; 519) starting from the bore (10; 110; 310; 410; 510) and extending radially into the wall (18; 418; 518).

7. A fixing means according to any one of claims 1 to 6, **characterised in that** the region in which the fixing means is able to shear continuously amounts to several millimetres, especially more than 5 mm and preferably more than 10 mm.

8. A fixing means according to any one of claims 1 to 7, **characterised in that** from a first permitted shear point, the external thread (7; 107; 207; 307) becomes tighter towards the head region (2).

9. A fixing means according to claim 8, **characterised in that** the form of the external thread (7; 107; 207; 307) in the region from the first permitted shear point towards the head region (2) is different compared with the form of the external thread (7; 107; 207; 307) in the axially opposite region, relative to the first permitted shear point.

10. A fixing means according to claim 9, **characterised in that**, in the region from the first permitted shear point towards the head region (2), the outer diameter of the external thread (7; 107; 207; 307) is increased, the thread angle is increased and/or the core diameter is increased.

11. A fixing means according to any one of claims 8 to 10, **characterised in that** from the first permitted shear point in the direction towards the head region (2) the external thread (7; 107; 207; 307) has at least in sections a coating (16), especially a plastics lacquer.

12. A fixing means according to any one of claims 1 to 11, **characterised in that** the bore (10; 110; 310; 410; 510) preferably has a further locating surface (317) for the application of a tool, preferably close to or at its end remote from the head region.

13. A device for screwed connection of electrical conductors (21), especially a screw-type connecting terminal (20), having at least one fixing means according to any one of claims 1 to 12 screwable into a terminal body (23).

## Revendications

1. Moyen de fixation, en particulier vis de rupture (1, 101, 201, 301, 401, 501) avec une zone de tête (2) présentant une surface d'attaque de l'outil (6) et une zone de filet (3) présentant sur au moins une partie de son étendue axiale un filet extérieur d'un seul tenant (7, 107, 207, 307) et une forure (10, 110, 310, 410, 510), **caractérisé en ce que** l'épaisseur (14) de la paroi (18, 418, 518) formée dans la zone du filet (3) entre la forure (10, 110, 310, 410, 510) et le filet extérieur (7, 107, 207, 307) augmente de manière continue sur au moins une partie de son étendue axiale en partant d'une extrémité éloignée de la zone de tête vers une extrémité à proximité de la zone de tête.

2. Moyen de fixation selon la revendication 1, **caractérisé en ce que** l'épaisseur (14) de la paroi (18, 418, 518) est inférieure au diamètre (11, 12) de la forure (10, 110, 310, 410, 510), et est en particulier inférieure à 50% du diamètre (11, 12), et est de préférence inférieure à 10% du diamètre (11, 12).

3. Moyen de fixation selon la revendication 1 ou 2, **caractérisé en ce que** le diamètre (11, 12) de la forure (10, 110, 310, 410, 510) diminue de manière continue sur au moins une partie de son étendue axiale en partant d'une extrémité éloignée de la zone de tête vers une extrémité à proximité de la zone de tête.

4. Moyen de fixation selon l'une quelconque des revendications 1 à 3, **caractérisé en ce que** la forure (10, 110, 310, 410, 510) est conique sur au moins une partie de son étendue axiale.

5. Moyen de fixation selon la revendication 4, **caractérisé en ce que** l'angle (13) du cône est inférieur à 5°, et est en particulier inférieur à 2°, et est de préférence d'environ 1°.

6. Moyen de fixation selon l'une quelconque des revendications 1 à 5, **caractérisé en ce que** la paroi (18, 418, 518) présente au moins un évidement (419, 519) partant de la forure (10, 110, 310, 410, 510) et s'étendant radialement dans la paroi (18, 418, 518).

7. Moyen de fixation selon l'une quelconque des revendications 1 à 6, **caractérisé en ce que** la zone dans laquelle le moyen de fixation peut se rompre de manière continue mesure plusieurs millimètres, en particulier plus de 5 mm, et de préférence plus de 10 mm.

8. Moyen de fixation selon l'une quelconque des revendications 1 à 7, **caractérisé en ce qu'**à partir d'un premier emplacement autorisé de rupture, le filet extérieur (7, 107, 207, 307) est plus dur en direction de la zone de tête (2).

9. Moyen de fixation selon la revendication 8, **caractérisé en ce que** la forme du filet extérieur (7, 107, 207, 307) varie dans la zone à partir du premier emplacement autorisé de rupture jusque vers la zone de tête (2), par rapport à la forme du filet extérieur (7, 107, 207, 307) dans la zone située axialement en vis-à-vis par rapport à la première zone autorisée de rupture.

10. Moyen de fixation selon la revendication 9, **caractérisé en ce que** dans la zone à partir du premier emplacement autorisé de rupture jusque vers la zone de tête (2), le diamètre extérieur du filet extérieur (7, 107, 207, 307) augmente, l'angle du filet augmente et/ou le diamètre du noyau augmente.

11. Moyen de fixation selon l'une quelconque des revendications 8 à 10, **caractérisé en ce qu'**à partir du premier emplacement autorisé de rupture en direction de la zone de tête (2), le filet extérieur (7, 107, 207, 307) présente au moins de manière localisée un revêtement (16), en particulier un vernis synthétique.

12. Moyen de fixation selon l'une quelconque des revendications 1 à 11, **caractérisé en ce que** la forure (10, 110, 310, 410, 510) présente de préférence à proximité ou à son extrémité éloignée de la zone de tête, une autre surface d'attaque de l'outil (317).

13. Dispositif pour l'assemblage par vis de conducteurs électriques (21), en particulier pince d'assemblage par vis (20), avec au moins un moyen de fixation selon l'une quelconque des revendications 1 à 12 pouvant être vissé dans un corps de serrage (23).
